# EUROPÄISCHE PATENTANMELDUNG

(11) **EP 0 652 603 A1**
(43) Veröffentlichungstag der Anmeldung: **10.05.1995**
(21) Anmeldenummer: 94116978.1
(22) Anmeldetag: 27.10.1994
(51) Int. Cl.: H01M 6/52, C22B 7/00

(54) **Verfahren zur hydrometallurgischen Aufbereitung von verbrauchten Haushalts- und Gerätebatterien**

(30) Priorität: 05.11.1993 DE 4337747
(71) Anmelder: Keramchemie GmbH, D-56427 Siershahn (DE)
(72) Erfinder: Fröhlich, Siegmund, Dr. Dipl.-Chem., D-56422 Wirges (DE); Schöpping, Siegfried, Dipl.-Ing., D-56414 Steinefrenz (DE)
(74) Vertreter: Kossobutzki, Walter, Dipl.-Ing.(FH)

(57) **Zusammenfassung**

Die Erfindung bezieht sich auf ein Verfahren zur hydrometallurgischen Aufbereitung von verbrauchten Haushalts- und Gerätebatterien zur Wiedergewinnung der insbesondere metallhaltigen Rohstoffen, bei dem das durch Zerkleinerung der Batterien und Abtrennung von Reststoffen entstandene feine Pulver mittels einer Säure aufgeschlossen und dabei zumindest ein großer Teil der Inhaltstoffe des Pulvers in Lösung gebracht wird und bei dem nach mindestens einem weiteren Verfahrensschritt aus der selektiv gewonnenen, nur ein Metall als Hauptbestandteil enthaltenden Metallsalzlösung der metallhaltige Rohstoff zurückgewonnen wird.

Um ohne große Investitions- und Betriebskosten die Verfahrensprodukte, das sind die in der säurehaltigen Metallsalzlösung enthaltenen Metalle, als Chemiegrundstoffe zurückzugewinnen und zu verwerten, wird das Metall aus der Metallsalzlösung als Chemiegrundstoff, beispielsweise als Carbonat, Hydroxid und/oder Oxihydrat, aufkonzentrierte Metalllösung und/oder Metallsalz gewonnen.

## Beschreibung

Die Erfindung bezieht sich auf ein verfahren zur hydrometallurgischen Aufbereitung von verbrauchten Haushalts- und Gerätebatterien zur Wiedergewinnung der insbesondere metallhaltigen Rohstoffen, bei dem das durch Zerkleinerung der Batterien und Abtrennung von Reststoffen entstandene feine Pulver mittels einer Säure aufgeschlossen und dabei zumindest ein großer Teil der Inhaltstoffe des Pulvers in Lösung gebracht wird und bei dem nach mindestens einem weiteren Verfahrensschritt aus der selektiv gewonnenen, nur ein Metall als Hauptbestandteil enthaltenden Metallsalzlösung der metallhaltige Rohstoff zurückgewonnen wird.

In der Bundesrepublik Deutschland fallen derzeit jährlich etwa 25.000 t verbrauchter Haushalts- und Gerätebatterien an, die entweder direkt im allgemeinen Müll landen oder bei ausreichendem Umweltbewußsein gesammelt und später auf besondere Deponien gelagert werden. Diese deponierten Altbatterien stellen aufgrund ihrer toxischen Bestandteile eine nicht unbeachtliche Umweltgefahr dar. Andererseits enthalten diese verbrauchten Altbatterien jedoch wertvolle Rohstoffe, die bei der Deponierung verloren gehen.

Um die Gefahr einer Umweltbelastung zu vermeiden und die Rohstoffe der verbrauchten Altbatterien zurückzugewinnen, wurde bereits vorgeschlagen, die Altbatterien zu zerkleinern und dabei, soweit wie möglich, die Reststoffe, wie Eisen, Aluminium, Buntmetalle, Kunststoffe und Papier, abzutrennen und das verbleibende, pulverförmige Produkt, welches dann im wesentlichen nur noch Zink, Nickel, Cadmium, Kupfer, Lithium und Mangan in unterschiedlicher Form enthält, mit einer verdünnten Säure aufzuschließen.

Die jetzt vorliegende, noch mehrere Metalle enthaltende, säurehaltige Metallsalzlösung wird nun in mehreren Extraktionsstufen so aufgearbeitet, daß eine Metallsalzlösung mit nur einem Metall als Hauptbestandteil vorliegt. Diese schwach sauren Metallsalzlösungen werden bei dem vorbekannten Verfahren anschließend durch eine Elektrolyse aufgearbeitet, um die reinen Metalle zu erhalten. Dies erfordert einen hohen Aufwand an Anlagen und elektrischer Energie, der wirtschaftlich nicht vertretbar ist. Dies bedeutet, daß die dabei gewonnenen, reinen Metalle nicht zu einem marktgerechten Preis verkauft werden können.

Der Erfindung liegt deshalb die Aufgabe zugrunde, ein Verfahren zur hydrometallurgischen Aufbereitung von verbrauchten Haushalts- und Gerätebatterien zur Wiedergewinnung der metallhaltigen Rohstoffe aufzuzeigen, bei dem es ohne große Investitions- und Betriebskosten möglich ist, die Verfahrensprodukte, das sind die in der säurehaltigen Metallsalzlösung enthaltenen Metalle, als Chemiegrundstoffe zurückzugewinnen und zu verwerten.

Zur Lösung dieser Aufgabe wird gemäß der Erfindung bei einem Verfahren der eingangs beschriebenen Gattung vorgeschlagen, daß das Metall aus der Metallsalzlösung als Chemiegrundstoff, beispielsweise als Carbonat, Hydroxid und/oder Oxihydrat, aufkonzentrierte Metalllösung und/oder Metallsalz gewonnen wird.

Durch ein derartiges Verfahren können die bisher als erforderlich erachtete Elektrolyse und die damit verbundenen, hohen Investitions- und Betriebskosten vermieden werden.

Weitere Merkmale eines Verfahrens gemäß der Erfindung sind in den Ansprüchen 2 - 6 offenbart.

Die Erfindung wird nachfolgend anhand eines Ausführungsbeispieles näher erläutert.

Das durch eine mehrstufige Zerkleinerung gewonnene Pulver von Altbatterien - dies sind Haushalts- und Gerätebatterien - wird für eine Extraktion mittels einer Säure aufgeschlossen. Dabei ist dieses Pulver zumindest weitgehend von Reststoffen - darunter sind in diesem Fall Eisen, Aluminium, Buntmetalle, Kunststoffe und Papier zu verstehen - befreit ist. Jetzt liegt eine säurehaltige Metallsalzlösung vor, die als Metalle hauptsächlich noch Mangan, Nickel, Kupfer, Cadmium und Zink enthält. In mehreren Extraktionsstufen wird nun diese säurehaltige Metallsalzlösung so aufgearbeitet, daß getrennte, schwach saure Metallsalzlösungen entstehen, die jeweils nur noch ein Metall als Hauptbestandteil enthalten. Diesen schwach sauren Metallsalzlösungen werden Reagenzien, beispielsweise Soda, Natriumhydrogencarbonat oder Kohlensäure zugemischt, die dazu führen, daß die Metalle als Carbonate gefällt werden.

Eine derartige Fällung ist insbesondere zur Gewinnung von Mangancarbonat von Vorteil. Durch eine Fest-/Flüssigtrennung wird dann das Mangancarbonat aus der Lösung separiert und kann dann nach einer Trocknung verkauft werden. Durch die Zugabe dieser Reagenzien können auch die anderen Metalle als Carbonate gefällt werden.

Eine weitere Möglichkeit zur Rückgewinnung von metallhaltigen Chemiegrundstoffen besteht darin, den schwach sauren Metallsalzlösungen, die als Hauptbestandteil Mangan, Nickel, Kupfer, Cadmium oder Zink enthalten, eine Natrium- und/oder Kalilauge zugemischt wird. Dabei werden die Metalle als Hydroxide und/oder Oxihydrate ausgefällt. Durch eine Fest-/Flüssigtrennung werden anschließend die Hydroxide und/oder Oxihydrate separiert, wobei ein stichfester Kuchen entsteht, der entweder sofort in dieser Form oder gegebenenfalls nach einer Trocknung verkauft wird.

Schließlich ist es auch bei den nur ein Metall als Hauptbestandteil enthaltenden, schwach sauren Metallsalzlösungen, die entweder Mangan, Nickel, Kupfer, Cadmium oder Zink enthalten, möglich, diese Metallsalzlösung durch Umkehrosmose, Elektrodialyse oder Verdampfung aufzukonzentrieren und diese Lösung zu vertreiben. Um reine Metallsalze zu erhalten, wird die aufkonzentrierte Metallsalzlösung dann noch über einen Verdampfer und gegebenenfalls einen Trockner geführt.

## Patentansprüche

1. Verfahren zur hydrometallurgischen Aufbereitung von verbrauchten Haushalts- und Gerätebatterien zur Wiedergewinnung der insbesondere metallhaltigen Rohstoffen, bei dem das durch Zerkleinerung der Batterien und Abtrennung von Reststoffen entstandene feine Pulver mittels einer Säure aufgeschlossen und dabei zumindest ein großer Teil der Inhaltstoffe des Pulvers in Lösung gebracht wird und bei dem nach mindestens einem weiteren Verfahrensschritt aus der selektiv gewonnenen, nur ein Metall als Hauptbestandteil enthaltenden Metallsalzlösung der metallhaltige Rohstoff zurückgewonnen wird,
dadurch gekennzeichnet,
daß das Metall aus der Metallsalzlösung als Chemiegrundstoff, beispielsweise als Carbonat und/oder Hydroxid und/oder Oxihydrat und/oder aufkonzentrierte Metalllösung und/oder Metallsalz gewonnen wird.

2. Verfahren nach Anspruch 1,
dadurch gekennzeichnet,
daß Mangan, Zink, Nickel, Kupfer und/oder Cadmium aus der säurehaltigen Metallsalzlösung als Carbonate gewonnen werden.

3. Verfahren nach Anspruch 2,
dadurch gekennzeichnet,
daß die Carbonate durch Fällung mit Soda (Na₂ CO₃) und/oder mit Natriumhydrogencarbonat (Na₂ CO₃) oder mit Kohlendioxyd (CO₂) und durch Separierung gewonnen werden.

4. Verfahren nach Anspruch 1,
dadurch gekennzeichnet,
daß Mangan, Nickel, Kupfer, Cadmium und/oder Zink aus der säurehaltigen Metallsalzlösung als Hydroxide und/oder Oxihydrate gewonnen werden.

5. Verfahren nach Anspruch 4,
dadurch gekennzeichnet,
daß die Hydroxide und/oder Oxihydrate durch Zugabe von Lauge, insbesondere von Natrium- und/oder Kalilauge, ausgefällt und durch Separierung gewonnen werden.

6. Verfahren nach Anspruch 1,
dadurch gekennzeichnet,
daß Mangan, Nickel, Kupfer, Cadmium und/oder Zink als zumindest teilweise aufkonzentrierte Metallösung oder als Metallsalze gewonnen werden.
